# FASCICULE DE BREVET EUROPEEN

(11) **EP 2 900 525 B1**
(45) Date de publication et mention de la délivrance du brevet: **05.05.2021**
(21) Numéro de dépôt: 13774103.9
(22) Date de dépôt: 26.09.2013
(51) Int. Cl.: B60S 1/34, B60S 1/38, B60S 1/52

(54) **DISPOSITIF D'ACTIONNEMENT D'UN BRAS D'ENTRAINEMENT D'UN BALAI D'ESSUYAGE, EN PARTICULIER POUR VITRE ARRIERE DE VEHICULE, ET SYSTEME D'ESSUYAGE EQUIPE DUDIT DISPOSITIF**
VORRICHTUNG ZUR BETÄTIGUNG EINES ANTRIEBSARMS EINES SCHEIBENWISCHERS, INSBESONDERE FÜR DIE HECKSCHEIBE EINES KRAFTFAHRZEUGES, UND WISCHSYSTEM MIT EINER SOLCHEN VORRICHTUNG
DEVICE FOR ACTUATING A DRIVING ARM OF A WIPER, IN PARTICULAR FOR THE REAR WINDOW OF A VEHICLE, AND WIPING SYSTEM EQUIPPED WITH SUCH A DEVICE

(30) Priorité: 27.09.2012 FR 1259088
(43) Date de publication de la demande: 05.08.2015
(73) Titulaire: Valeo Systèmes d'Essuyage, 78322 Le Mesnil Saint Denis (FR)
(72) Inventeur: ROUSSEAU, Jean-François, 63340 Charbonnier Les Mines (FR)
(74) Mandataire: Valeo Visibility
(86) Numéro de dépôt international: PCT/EP2013/070139
(87) Numéro de publication internationale: WO 2014/049096

(56) Documents cités:
- EP-A1- 1 914 130
- WO-A1-2011/131245
- DE-A1-102010 049 742
- FR-A5- 2 236 359
- US-A1- 2011 056 041

## Description

Le secteur technique de la présente invention est celui des systèmes d'essuyage d'une vitre d'un véhicule, notamment automobile. Le système conforme à l'invention est plus particulièrement destiné à être installé sur une vitre ou lunette arrière du véhicule.

En matière d'essuyage des vitres d'une automobile, l'accent est souvent mis sur l'essuyage du pare-brise. Cependant, l'essuyage de la vitre arrière ne doit pas être oublié. Il sert en effet à assurer au conducteur une vision dégagée du trafic à l'arrière du véhicule ou en cas de marche arrière. Alors que les balais d'essuyage pour pare-brise sont généralement amovibles par rapport à leur bras d'entrainement pour permettre le remplacement du seul balai en cas d'usure, dans le cas de système pour vitre-arrière, il est connu de remplacer au contraire un ensemble formé à la fois du balai d'essuyage et du bras d'entrainement. Ledit ensemble est pour cela rendu amovible par rapport à un moyeu ou dispositif d'actionnement du bras. Différentes solutions ont déjà été proposées en ce sens mais présentent des difficultés, en particulier en termes de poids et de dimensions des systèmes équipés.

Le document FR2236359 A5 décrit un système d'essuyage comprenant un dispositif d'actionnement pour bras d'entraînement d'un balai d'essuyage.

Il est par ailleurs classique d'assurer un lavage des vitres arrière à l'aide de buses d'aspersion d'un liquide de lavage, lesdites buses étant disposées sur la carrosserie du véhicule. Selon une version plus récente, il est également connu des systèmes d'essuyage permettant de réaliser une aspersion directement à partir des balais. Un tel résultat est obtenu en ménageant dans les balais des buses de projection du liquide de lavage, lesdites buses de projection étant alimentées à partir d'un circuit amenant le liquide de lavage jusqu'aux balais.

Cela étant, les dispositifs de connexion pour système d'essuyage de vitre arrière sont difficilement compatibles avec de tels systèmes.

L'invention vise à pallier les inconvénients précités et propose à cet effet un dispositif d'actionnement pour bras d'entraînement d'un balais d'essuyage, notamment de véhicule automobile, ledit dispositif comprenant un corps, articulé en rotation autour d'un axe de pivotement et apte à recevoir ledit bras, et un moyen de verrouillage dudit bras sur ledit corps, ledit moyen de verrouillage étant articulé sur ledit corps au niveau d'une extrémité distale dudit corps selon un axe d'articulation transversal audit axe du pivotement du corps, ledit moyen de verrouillage étant configuré pour s'encliqueter sur ledit corps à une extrémité opposée, ledit corps comprenant un méplat et ledit moyen de verrouillage comprend une barrette, ledit moyen de verrouillage comprenant deux bras munis d'ergots, les deux bras reliant ladite barrette audit axe d'articulation au niveau des ergots s'insérant élastiquement dans des orifices d'articulation du corps, ledit moyen de verrouillage étant configuré pour venir prendre en sandwich ledit bras entre ledit méplat et ladite barrette.

On dispose de la sorte d'une solution permettant un montage et démontage facile du bras et, par suite, du balai. Il s'agit en outre d'une solution qui facilite l'utilisation d'un dispositif d'aspersion de liquide de lavage intégré au balai.

Selon différents modes de réalisation de l'invention, qui pourront être pris ensemble ou séparément :
- ledit corps est configuré pour positionner ledit bras avant verrouillage,
- ledit corps comprend deux faces latérales s'étendant à partir dudit méplat, configurées pour accueillir des ailes latérales dudit bras et permettre un blocage dudit bras selon une direction tangentielle,
- lesdites faces latérales comprennent des encoches configurées pour loger lesdites ailes en les bloquant selon une direction radiale,
- ledit corps comprend un logement de passage pour un arbre d'entraînement destiné à être solidarisé audit corps,
- ledit corps comprend un ou des orifices de fixation d'un capot,
- ledit moyen de verrouillage comprend une lumière de passage d'un circuit d'alimentation en liquide de lavage.

L'invention concerne également un système d'essuyage comprenant un dispositif d'actionnement tel que décrit plus haut.

Selon différents mode de réalisation de l'invention, qui pourront être pris ensemble ou séparément :
- ledit système comprend un bras d'entrainement solidarisé audit dispositif d'actionnement et/ou un balai d'essuyage apte à être actionné par ledit bras,
- ledit bras présente un effet ressort permettant d'appliquer le balai contre une vitre à essuyer,
- ledit système comprend un dispositif d'aspersion depuis ledit balai,
- ledit dispositif d'aspersion comprend un conduit flexible reliant un embout prévu au niveau dudit bras et/ou dudit balai, d'une part, et, d'autre part, une arrivée de liquide d'aspersion, située au niveau dudit axe de pivotement du dispositif d'actionnement,
- ledit système comprend un capot dudit dispositif d'actionnement,
- ledit capot comprend des ergots de fixation sur ledit corps,
- lesdits ergots viennent s'insérer dans lesdits orifices de fixation.

D'autres caractéristiques, détails et avantages de l'invention ressortiront plus clairement à la lecture de la description donnée ci-après à titre indicatif en relation avec des dessins dans lesquels :
- la figure 1 illustre en perspective un exemple de système d'essuyage conforme à l'invention,
- la figure 2 est une vue éclatée, partielle, de la figure 1,
- la figure 3 est une vue selon la figure 2 dans laquelle les organes dudit dispositif d'actionnement, d'une part, et, d'autre part, les organes de l'ensemble formé par le balai et le bras dudit système d'essuyage sont représentés de façon assemblé,

- la figure 4 détaille une partie de la figure 1, le capot du système d'essuyage n'ayant pas été représenté afin de mieux voir les moyens de verrouillage du dispositif d'actionnement du système, en position ouverte ou déverrouillée,
- la figure 5 reprend la figure 4, les moyens de verrouillage étant cette fois en position verrouillée,
- la figure 6 reprend, partiellement, la figure 1, selon un autre angle de vue.

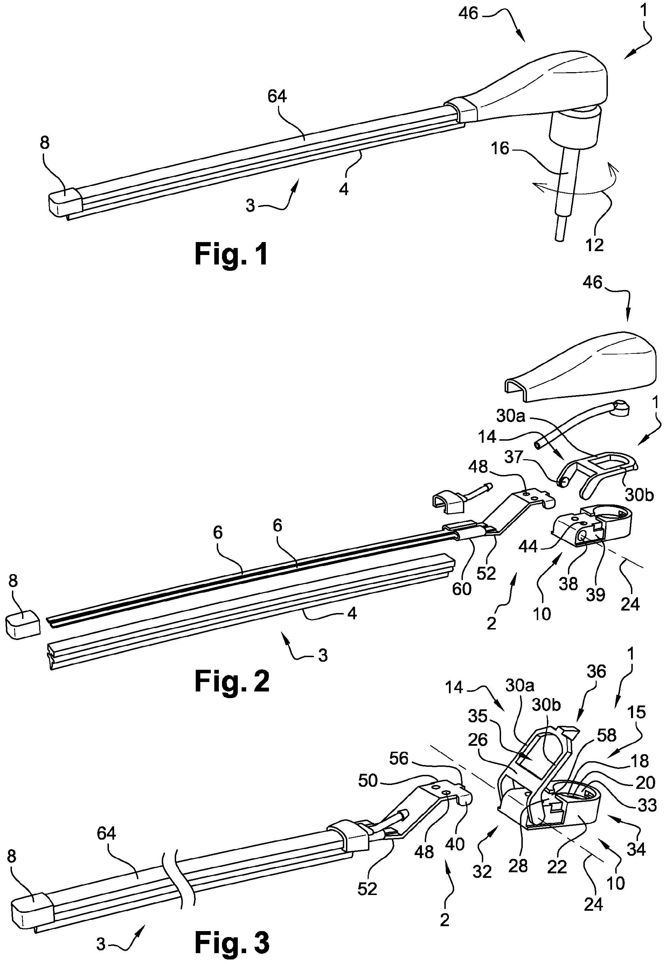

Comme illustré aux figures 1 à 3, l'invention concerne un dispositif d'actionnement 1 d'un bras d'entrainement 2 d'un balai d'essuyage 3 d'une vitre de véhicule, ici d'une vitre arrière de véhicule automobile. L'invention concerne également un système d'essuyage comprenant ledit dispositif d'actionnement ainsi que, par exemple, ledit bras d'entrainement 2 et/ou ledit balai d'essuyage 3.

Le balai d'essuyage 3, lorsqu'il est monté sur le véhicule, est en appui contre une face extérieure de la vitre arrière du véhicule. La vitre arrière mentionnée ici est un exemple d'une vitre essuyée par le système d'essuyage selon l'invention, mais il va de soi que cette vitre peut être un pare-brise du véhicule et d'une manière générale tout vitrage d'un véhicule automobile dont la surface est apte à être essuyée par un système d'essuyage.

Ledit système est avantageusement destiné à être positionné sur le véhicule de façon à ce que ledit balai d'essuyage 3, au repos, soit en position sensiblement horizontale, par exemple, le long d'un bord inférieur de la vitre arrière. En fonctionnement, il pivote alors selon un mouvement de va et vient entre sa position de repos et une position angulairement décalée de ladite position de repos de façon à essuyer la zone souhaitée.

Comme cela est plus particulièrement visible à la figure 2, le ou les balais d'essuyage 3 sont par exemple de type à lame plate (flat blade, en anglais), c'est-à-dire comprenant au moins une raclette 4 destinée à être plaquée contre la vitre arrière et une ou plusieurs vertèbres de rigidification 6, ici deux, reliées à la raclette 4 et qui s'étendent le long de celle-ci. D'un côté, en l'occurrence à gauche sur la figure 2, la raclette 4 et les vertèbres 6 présentent des extrémités axiales situées en vis-à-vis tandis qu'à leurs extrémités opposées, les vertèbres 6 s'étendent axialement au-delà de la raclette 4.

Ledit système d'essuyage comprend en outre ici un embout d'assemblage 8 permettant de solidariser la raclette 4 et les vertèbres 6 au niveau de leurs extrémités situées en vis-à-vis ainsi que, ici, un cache 64 des vertèbres 6 et d'une partie supérieure de la raclette 4 (figures 1 et 3). A leur autre extrémité, les vertèbres 6, en particulier leur partie dépassant axialement de la raclette 4, sont solidarisées au bras d'entrainement 2, comme cela sera détaillé plus loin.

Le balai d'essuyage 3 est mis en mouvement sur la vitre arrière du véhicule par le dispositif d'actionnement 1, lui-même entraîné par un ensemble d'actionnement comprenant, par exemple, un moteur électrique, avantageusement électronisé, chargé de transformer l'énergie électrique en un mouvement de rotation.

Selon l'invention, ledit dispositif d'actionnement 1 comprend un corps 10, apte à recevoir ledit bras 2. Ledit corps 10 est articulé en rotation autour d'un axe de pivotement, selon une flèche repérée 12 (figure 1). Ledit dispositif d'actionnement comprend en outre un moyen 14 de verrouillage dudit bras 2 sur ledit corps 10, ledit moyen 14 de verrouillage étant articulé sur ledit corps 10. On dispose de la sorte d'une solution permettant un remplacement facile du balai 3 en cas d'usure.

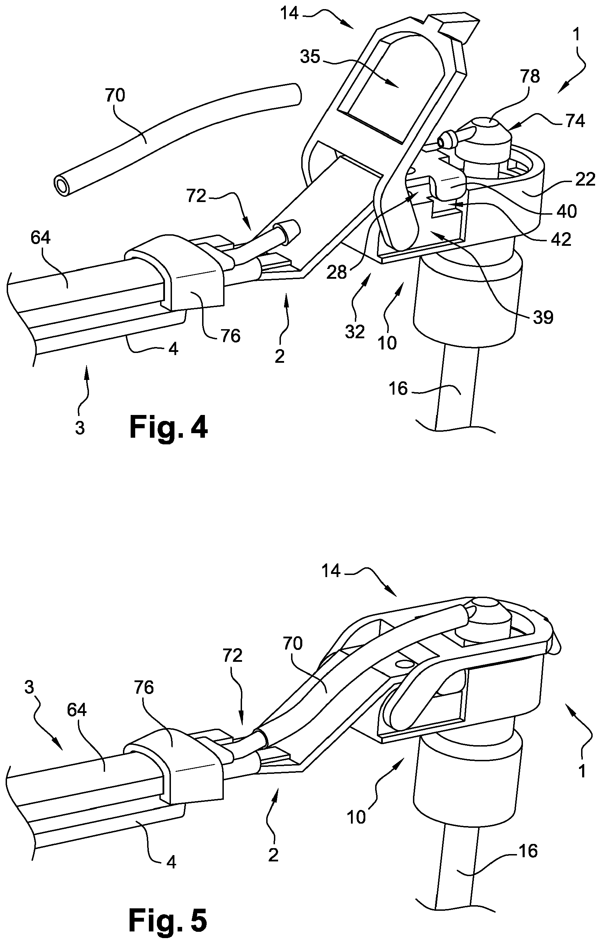

Ceci est plus particulièrement illustré aux figures 4 et 5 dans lequel ledit moyen 14 de verrouillage est, respectivement dans une position ouverte et dans une position verrouillée. A la figure 4, on constate que le bras 2 est désolidarisé du corps 10 du dispositif d'actionnement et peut être alors être échangé. A la figure 5, il a été remis en place et il est il bloqué par le moyen 14 de verrouillage.

Si l'on se reporte de nouveau aux figures 1 à 3, on constate que ledit corps 10 comprend, par exemple, un logement 15 de passage pour un arbre d'entraînement 16 de l'ensemble d'entraînement, destiné à être solidarisé audit corps 10, ledit arbre d'entrainement faisant pivoter ledit dispositif d'actionnement 1 et par suite ledit bras 2 et ledit balai 3 autour dudit axe de pivotement du corps. Ledit logement comprend un fond 18 au niveau duquel débouche un orifice 20 de passage dudit arbre d'entraînement 16 et une paroi latérale 22 issue du fond 18 de sorte que ledit logement définit un épaulement autour dudit orifice de passage 18.

Ledit moyen 14 de verrouillage est articulé en rotation sur ledit corps selon un axe d'articulation 24, transversal audit axe de pivotement du corps 10. Ledit axe d'articulation 24 est ici orienté orthogonalement audit axe de pivotement du corps 10, par exemple tangentiellement à un cercle centré sur ledit axe de pivotement.

Ledit moyen de verrouillage comprend, par exemple, une barrette 26, ledit moyen 14 de verrouillage étant configuré pour venir prendre en sandwich ledit bras 2 entre un méplat 28 dudit corps 10 et ladite barrette 26. Ledit moyen 14 de verrouillage comprend ici deux bras 30a, 30b reliant ladite barrette 26 audit axe d'articulation 24. Ladite barrette 26 est ainsi articulée en rotation autour dudit axe d'articulation 24.

Ledit moyen 14 de verrouillage est articulé, par exemple, au niveau d'une extrémité distale 32 dudit corps 10. Lesdits bras 30a, 30b sont munis pour cela, par exemple, d'ergots 37 s'insérant élastiquement dans des orifices d'articulation 38 situés sur des faces latérales 39, notamment parallèles, du corps 10.

Ledit moyen 14 de verrouillage pourra être configuré pour s'encliqueter sur ledit corps 10 à une extrémité 34 opposée à ladite extrémité distale 32, notamment par l'intermédiaire d'un crochet 36. Ledit corps 10 est muni d'une fente 33 pour l'insertion dudit crochet 36 en position verrouillé, ladite fente 33 étant ici située au niveau de la paroi latérale 22 du logement 15 du corps 10.

Ledit moyen 14 de verrouillage pourra comprendre une lumière 35 de passage d'un circuit d'alimentation d'un liquide de lavage, comme cela est détaillé plus loin. Autrement dit, les bras 30a, 30b s'étendent parallèlement depuis ledit axe d'articulation 24 au-delà de ladite barrette 26 et se rejoignent au niveau du crochet 36 pour définir ladite lumière 36 entre ladite barrette 26 et ledit crochet 36. Ledit moyen 14 de verrouillage est configuré pour que ladite lumière se trouve en vis-à-vis dudit logement 15 du corps 10, en position verrouillé dudit moyen 14 de verrouillage.

Comme plus particulièrement visible figure 4, ledit corps 10 est avantageusement configuré pour positionner ledit bras 2 avant verrouillage. Ici, les deux faces latérales 39 munies des orifices d'articulation 38 s'étendent à partir dudit méplat 28, lesdites ailes latérales 39 étant configurées pour accueillir des ailes latérales 40 dudit bras 2 et permettre un blocage dudit 2 bras selon la direction tangentielle. Lesdites faces latérales 39 comprennent, par exemple, des encoches 42 configurées pour loger lesdites ailes 40 du bras 2 en les bloquant selon une direction radiale, correspondant à l'axe d'extension longitudinale du balai 3. Lesdites faces latérales 39 s'étendent, par exemple, entre l'extrémité distale 32 du corps 10 et la paroi latérale 22 du logement 15 du corps 10.

Cela étant, en se reportant de nouveau aux figures 1 à 3, on constate que ledit système d'essuyage conforme à l'invention pourra également comprendre un capot 46 dudit système d'essuyage. En utilisation, ledit capot 46 recouvre, par exemple, ledit dispositif d'actionnement 1 et/ou ledit bras 2. Il est amovible pour permettre d'avoir accès audit dispositif d'actionnement 1 et passer de la position verrouillée à la position ouverte du moyen de verrouillage 14.

Ledit corps 10 pourra comprendre un ou des orifices 44 de fixation dudit capot 46 dudit système d'essuyage. Lesdits orifices de fixation 44 sont situés, par exemple, entre la barrette 26 et l'extrémité distale 32 du corps 10, en position verrouillée. Ledit bras 2 pourra alors comprendre des orifices 48 de passage situés dans le prolongement desdits orifices de fixation 44. La fixation du capot 46 sur le corps 10 est ainsi réalisée par l'introduction d'ergots, non visibles, situés à l'intérieur dudit capot 46, dans lesdits orifices de fixation 44 à travers les orifices de passage 48.

Ledit bras 2 présente avantageusement un effet ressort permettant d'appliquer le balai 3 contre la vitre à essuyer. Il est réalisé pour cela, par exemple, en un matériau métallique présentant une élasticité appropriée. Il présente en outre un profil en forme de S aplati muni de deux languettes 50, 52 parallèles reliées par une branche oblique 54.

L'une 50 des languettes forme l'extrémité proximale du bras 2. Elle est reliée audit dispositif d'actionnement 1, en position verrouillée, en venant être pris en sandwich entre ledit méplat 28 du corps 10 et ladite barrette 26 du moyen 14 de verrouillage. Ladite première languette 50 est munie desdits ailes 40 du bras 2 et desdits orifices 48 de passage des ergots du capot 46. Ladite première languette comporte ici un têton 56 destiné à coopérer avec une rainure 58 prévu dans le corps 10 en direction dudit logement 15 du corps 10.

L'autre 52 des languettes permet l'accrochage du balai 3. Elle comprend ici pour cela des bords rabattus 60 dans lesquels les vertèbres 6 sont bloquées.

Ledit système d'essuyage pourra comprendre en outre un dispositif d'aspersion d'un liquide lave-glace, en particulier un dispositif d'aspersion depuis ledit balai 3.

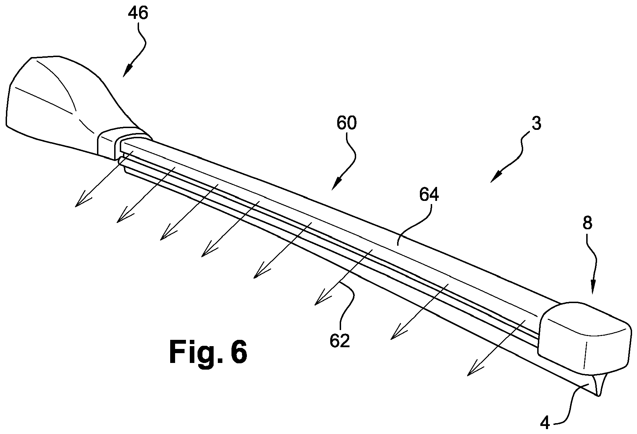

Comme plus particulièrement visible à la figure 6, ledit dispositif d'aspersion comprend une rampe d'aspersion 60 s'étendant le long du balai d'essuyage 3, selon la direction longitudinale d'extension de ce dernier, ladite rampe 60 comportant une pluralité d'orifices de projection agencés pour projeter le liquide de lavage au moins perpendiculairement à la direction longitudinale dans lequel il s'étend, selon les flèches illustrées 62.

Selon un exemple de réalisation, ladite rampe de projection 60 est fabriquée distinctement de la raclette 4, et rapportée sur cette dernière. Il peut en particulier s'agir d'une rampe 60 formée dans le cache 64 du balai 3. Selon un autre exemple de réalisation, ladite rampe d'aspersion pourra être formée par un conduit intégré à la raclette 4, et qui chemine le long de la direction longitudinale de ce dernier.

Ledit dispositif d'aspersion pourra être configuré pour asperger ladite vitre depuis ledit balai 3 selon une première et/ou une seconde direction d'aspersion opposée. Autrement dit, une dite rampe d'aspersion pourra être située de chaque côté dudit balai 3 pour asperger la vitre par un premier et/ou un second desdits côtés, notamment en fonction du sens ascendant ou descendant du balai 3.

Si l'on se reporte de nouveau aux figures 4 et 5, on constate que ledit dispositif d'aspersion comprend en outre ici un circuit d'alimentation de la ou desdites rampes d'aspersion. Ledit circuit d'alimentation comprend, par exemple, un conduit flexible 70, reliant un embout de connexion hydraulique 72 prévu au niveau dudit bras 2 et/ou dudit balai 3, d'une part, et, d'autre part, une arrivée 74 de liquide d'aspersion, située au niveau dudit axe de pivotement du corps 10. Ledit embout de connexion hydraulique 72 est situé, par exemple, au niveau d'un agrafe 76 solidarisant ledit cache 64 au reste du balai d'essuyage 3. Ladite arrivée de liquide comprend, notamment, une tête d'alimentation 78, reliée à un canal d'alimentation prévu dans l'arbre d'entrainement 16. Ladite tête d'alimentation 78 est située au niveau dudit logement 15 du corps 10 et débouche à travers la lumière 35 dudit moyen de verrouillage 14, en position verrouillée.

Pour passer de ladite position verrouillée à ladite position ouverte, ledit conduit flexible 70 est retirée dudit embout hydraulique 72 et/ou de ladite tête d'alimentation 78. Il peut ensuite être remis en place, après passage du moyen de verrouillage 14 en position verrouillée.

Ledit dispositif d'aspersion est alimenté par un dispositif de transport du liquide de lavage du pare-brise, non représenté. Selon un exemple de réalisation, un tel dispositif de transport du liquide prend la forme d'un ou plusieurs tuyaux qui canalisent le liquide de lavage depuis au moins un réservoir installé par exemple dans un compartiment avant du véhicule jusqu'au conduit situé dans le bras d'entrainement 16. Le liquide de lavage est mis en circulation dans le dispositif de transport de liquide, notamment, par au moins une pompe.

Le dispositif de transport du liquide, la pompe et optionnellement le réservoir forment un ensemble d'approvisionnement en liquide de lavage.

Le système d'essuyage et de lavage pourra également comprendre un dispositif de chauffage du liquide de lavage. Ce dernier est, par exemple, incorporé au réservoir. Alternativement, il peut être placé en tout endroit du dispositif de transport du liquide, par exemple de manière à entourer une portion d'un des tuyaux formant ce dispositif de transport.

De façon connue, l'aspersion du liquide de lavage pourra être activée par une commande au volant du véhicule, configurée pour être actionnée par le conducteur de façon à ce qu'il puisse laver sa vitre arrière quand désiré.

## Revendications

1. Dispositif d'actionnement pour bras d'entraînement (2) d'un balai d'essuyage (3), notamment de véhicule automobile, ledit dispositif comprenant un corps (10), articulé en rotation autour d'un axe de pivotement et apte à recevoir ledit bras (2), et un moyen (14) de verrouillage dudit bras (2) sur ledit corps (10), ledit moyen (14) de verrouillage est articulé en rotation sur ledit corps (10) au niveau d'une extrémité distale (32) dudit corps selon un axe d'articulation (24) transversal audit axe du pivotement du corps (10), ledit moyen (14) de verrouillage étant configuré pour s'encliqueter sur ledit corps à une extrémité (34) opposée, **caractérisé en ce que** ledit corps (10) comprend un méplat (28) et ledit moyen (14) de verrouillage comprend une barrette (26), ledit moyen (14) de verrouillage comprenant deux bras (30a, 30b) munis d'ergots (37), les deux bras (30a, 30b) reliant ladite barrette (26) audit axe d'articulation (24) au niveau des ergots (37) s'insérant élastiquement dans des orifices d'articulation (38) du corps (10), ledit moyen de verrouillage étant configuré pour venir prendre en sandwich ledit bras (2) entre ledit méplat (28) et ladite barrette (26).

2. Dispositif selon la revendication 1 dans lequel ledit corps (10) est configuré pour positionner ledit bras (2) avant verrouillage.

3. Dispositif selon l'une quelconque des revendications précédentes dans lequel ledit corps (10) comprend deux faces latérales (39) s'étendant à partir dudit méplat (28), configurées pour accueillir des ailes latérales (40) dudit bras (2) et permettre un blocage dudit bras (2) selon une direction tangentielle.

4. Dispositif selon la revendication 3 dans lequel lesdites faces latérales (39) comprennent des encoches (42) configurées pour loger lesdites ailes (40) en les bloquant selon une direction radiale.

5. Dispositif selon l'une quelconque des revendications précédentes dans lequel ledit corps (10) comprend un ou des orifices de fixation d'un capot (16).

6. Dispositif selon l'une quelconque des revendications précédentes dans lequel ledit moyen (14) de verrouillage comprend une lumière (35) de passage d'un circuit d'alimentation (70, 72, 74) en liquide de lavage.

7. Système d'essuyage comprenant un dispositif d'actionnement (1) selon l'une quelconque des revendications précédentes.

8. Système selon la revendication 7 comprenant un bras d'entrainement (2) solidarisé audit dispositif d'actionnement (1) et/ou un balai d'essuyage (3) apte à être actionné par ledit bras (2).

9. Système selon la revendication 8 dans lequel ledit bras (2) présente un effet ressort permettant d'appliquer le balai (3) contre une vitre à essuyer.

10. Système selon l'une quelconque de revendications 7 à 9 dans lequel ledit système comprend un dispositif d'aspersion depuis ledit balai (3).

11. Système selon la revendication 10 dans lequel ledit dispositif d'aspersion comprend un conduit flexible (70) reliant un embout (72) prévu au niveau dudit bras (2) et/ou dudit balai (3), d'une part, et, d'autre part, une arrivée (74) de liquide d'aspersion, située au niveau dudit axe de pivotement du dispositif d'actionnement (1).

12. Système selon l'un quelconques des revendications 7 à 11 dans lequel ledit système comprend un capot (16) dudit dispositif d'actionnement (1).

## Patentansprüche

1. Betätigungsvorrichtung für einen Antriebsarm (2) eines Wischerblatts (3), insbesondere eines Kraftfahrzeugs, wobei die Vorrichtung einen Körper (10), der um eine Schwenkachse drehbar angelenkt und in der Lage ist, den Arm (2) aufzunehmen, und eine Einrichtung (14) zur Verriegelung des Arms (2) auf dem Körper (10) enthält, wobei die Verriegelungseinrichtung (14) im Bereich eines distalen Endes (32) des Körpers gemäß einer Gelenkachse (24) quer zur Schwenkachse des Körpers (10) drehbar an den Körper (10) angelenkt ist, wobei die Verriegelungseinrichtung (14) konfiguriert ist, an einem gegenüberliegenden Ende (34) auf dem Körper einzurasten, **dadurch gekennzeichnet, dass** der Körper (10) eine Abflachung (28) enthält und die Verriegelungseinrichtung (14) einen Steg (26) enthält, wobei die Verriegelungseinrichtung (14) zwei mit Zapfen (37) versehene Arme (30a, 30b) enthält, wobei die zwei Arme (30a, 30b) den Steg (26) im Bereich der Zapfen (37) mit der Gelenkachse (24) verbinden, die elastisch in Gelenköffnungen (38) des Körpers (10) eingeführt werden, wobei die Verriegelungseinrichtung konfiguriert ist, den Arm (2) zwischen der Abflachung (28) und dem Steg (26) sandwichartig einzuklemmen.

2. Vorrichtung nach Anspruch 1, wobei der Körper (10) konfiguriert ist, den Arm (2) vor der Verriegelung zu positionieren.

3. Vorrichtung nach einem der vorhergehenden Ansprüche, wobei der Körper (10) zwei Seitenflächen (39) enthält, die sich ausgehend von der Abflachung (28) erstrecken, die konfiguriert sind, Seitenflügel (40) des Arms (2) aufzunehmen und eine Blockierung des Arms (2) gemäß einer tangentialen Richtung zu erlauben.

4. Vorrichtung nach Anspruch 3, wobei die Seitenflächen (39) Kerben (42) enthalten, die konfiguriert sind, die Flügel (40) aufzunehmen, indem sie sie gemäß einer radialen Richtung blockieren.

5. Vorrichtung nach einem der vorhergehenden Ansprüche, wobei der Körper (10) eine oder mehr Öffnungen zur Befestigung einer Kappe (16) enthält.

6. Vorrichtung nach einem der vorhergehenden Ansprüche, wobei die Verriegelungseinrichtung (14) ein Langloch (35) für den Durchgang eines Versorgungskreises (70, 72, 74) mit Waschflüssigkeit enthält.

7. Wischsystem, das eine Betätigungsvorrichtung (1) nach einem der vorhergehenden Ansprüche enthält.

8. System nach Anspruch 7, das einen Antriebsarm (2), der fest mit der Betätigungsvorrichtung (1) verbunden ist, und/oder ein Wischerblatt (3) enthält, das von dem Arm (2) betätigt werden kann.

9. System nach Anspruch 8, wobei der Arm (2) eine Federwirkung aufweist, die es ermöglicht, das Blatt (3) gegen eine zu wischende Scheibe zu drücken.

10. System nach einem der Ansprüche 7 bis 9, wobei das System eine Sprühvorrichtung ausgehend vom Blatt (3) enthält.

11. System nach Anspruch 10, wobei die Sprühvorrichtung einen Schlauch (70) enthält, der ein im Bereich des Arms (2) und/oder des Blatts (3) vorgesehenes Ansatzstück (72) einerseits und andererseits einen Sprühflüssigkeitseinlass (74) verbindet, der sich im Bereich der Schwenkachse der Betätigungsvorrichtung (1) befindet.

12. System nach einem der Ansprüche 7 bis 11, wobei das System eine Haube (16) der Betätigungsvorrichtung (1) enthält.

## Claims

1. An actuation device for a driving arm (2) of a wiper blade (3), in particular for a motor vehicle, said device comprising a body (10), articulated in rotation about a pivot axis and capable of receiving said arm (2), and a means (14) for locking said arm (2) on said body (10), said locking means (14) is articulated in rotation on said body (10) in the area of a distal extremity (32) of said body according to an axis of articulation (24) that is transversal to said pivot axis of the body (10), said locking means (14) being configured to clip onto said body at an opposite extremity (34), **characterised in that** said body (10) comprises a flat spot (28) and said locking means comprises a bar (26), said locking means comprising two arms (30a, 30b) provided with tabs (37), the two arms (30a, 30b) connecting said bar (26) to said axis of articulation (24) in the area of the tabs (37) inserted elastically into articulation orifices (38) of the body (10), said locking means being configured to sandwich said arm (2) between said flat spot (28) and said bar (26).

2. The device as claimed in claim 1, in which said body (10) is configured to position said arm (2) prior to locking.

3. The device as claimed in any of the preceding claims, in which said body (10) comprises two lateral faces (39) extending from said flat spot (28) configured to receive lateral wings (40) of said arm (2) and to permit blocking of said arm (2) in a tangential direction.

4. The device as claimed in claim 3, in which said lateral faces (39) comprise notches (42) configured to accommodate said wings (40) by blocking them in a radial direction.

5. The device as claimed in any of the preceding claims, in which said body (10) comprises one or a plurality of attachment holes for a cover (16).

6. The device as claimed in any of the preceding claims, in which said locking means (14) comprises a passage (35) of a circuit (70, 72, 74) for the supply of a washing liquid

7. A wiping system comprising an actuating device (1) as claimed in any of the preceding claims.

8. The system as claimed in claim 7, comprising a driving arm (2) attached to said actuating device (1) and/or a wiper blade (3) capable of being actuated by said arm (2).

9. The system as claimed in claim 8, in which said arm (2) exhibits a spring effect permitting the application of the blade (3) against a screen to be wiped.

10. The system as claimed in any of claims 7 to 9, in which said system comprises a device for spraying from said blade (3).

11. The system as claimed in claim 10, in which said spraying device comprises a flexible tube (70) connecting a nozzle (72) provided in the area of said arm (2) and/or of said blade (3), on the one hand, and, on the other hand, an inlet (74) for spraying liquid, situated in the area of said pivot axis of the actuating device (1).

12. The system as claimed in any of claims 7 to 11, in which said system comprises a cover (16) for said actuating device (1).
